# EUROPEAN PATENT APPLICATION

(11) **EP 4 290 223 A1**
(43) Date of publication of application: **13.12.2023**
(21) Application number: 23175307.0
(22) Date of filing: 25.05.2023
(51) Int. Cl.: G01N 21/84, G01N 21/86, G01N 21/89

(54) **MACHINE DIRECTION POSITION PROFILE MEASURMENT IN SHEET MANUFACTURING SYSTEMS**

(30) Priority: 06.06.2022 US 202263349500 P; 04.04.2023 US 202318130697
(71) Applicant: Honeywell International Inc., Charlotte, NC 28202 (US)
(72) Inventor: THALORE, Sudhir, Charlotte, 28202 (US); HOFMAN, Gertjan, Charlotte, 28202 (US); BARON, Ian, Charlotte, 28202 (US); HUGHES, Michael, Charlotte, 28202 (US)
(74) Representative: Houghton, Mark Phillip

(57) **Abstract**

A machine direction (MD) position profile measurement of a moving sheet records the MD position of each of the cross direction (CD) measurements. A sheet monitoring system includes means for measuring the MD speed of the sheet of material; means for associating measured MD speed with time to generate time-associated MD speeds; means for recording the time-associated MD speeds; a first scanning sensor for measuring a first characteristic of the sheet material wherein the first scanning sensor is located at a first position along the MD and the first scanner sensor traverses back and forth along a CD; and means for associating first characteristic measurements with time to generate time-associated first characteristic measurements. Single and multiple scanning sensors can be employed. For multiple scanner systems where the scanners are synchronized, the technique enables recreation of the real zig-zag measurement path and same spot measurements.

## Description

### REFERENCE TO RELATED APPLICATION

This application claims priority under 35 U.S.C.§ 119(e) to co-pending application No. 63/349,500 filed June 6, 2022, which is incorporated herein by reference.

### FIELD OF THE INVENTION

The present invention generally relates to quality control techniques for fabricating sheet materials and, more particularly, to methods of precisely matching measurements made during the production of uncoated or coated sheet products such as electrochemical cell electrodes to finished products such as electrochemical batteries incorporating anodes and cathodes so as to permit defects found at a later stage of production to be traced to the sources of the measured properties.

### BACKGROUND OF THE INVENTION

On-line measurements are used to detect properties of sheet materials during manufacture to enable prompt control of the sheetmaking processes and, thus, to assure sheet quality while reducing the quantity of substandard sheet material which is produced. One of the main complications in making on-line measurements during sheetmaking is that the physical properties of sheet materials usually vary in the machine direction (MD) as well as in the cross direction. MD refers to the direction of travel of the sheet material during manufacture, and the term "cross direction" refers to the direction across the surface of a sheet perpendicular to the MD.)

To detect variations in sheet materials, scanning sensors are employed that periodically traverse back and forth across a sheetmaking machine in the cross direction while detecting values of a selected sheet property such as basis weight or caliper along each scan. Normally, the sheet being produced is traversed from edge to edge during each scan. The time required for a typical scan is generally between a few seconds to tens of seconds depending on the cross-direction length which can be many meters. The rate at which measurement readings are provided by such scanners is usually adjustable; a typical rate is about one measurement reading every millisecond.

In practice, measurement information provided by scanning sensors is usually assembled after each scan to provide a "profile" of the detected sheet property in the cross direction. In other words, each profile is comprised of a succession of sheet measurements at adjacent locations in the cross direction. The purpose of the profiles is to allow cross-directional variations in sheet properties to be detected easily. Based upon the detected cross-directional variations in the detected sheet property, appropriate control adjustments may be made to the sheetmaking machine with the goal of reducing profile variations both in the cross direction and in the machine direction.

A scanning sensor that periodically traverses a sheet at generally constant speed cannot measure the selected sheet property at locations which are aligned exactly perpendicular to the longitudinal edges of the sheet. Due to finite sheet velocity, scanning sensors actually travel diagonally across the sheet surface, with the result that consecutive scanning paths have a zig-zag pattern with respect to the direction perpendicular to the longitudinal edges of the sheet. In practice, it is typical to calculate an average of profile measurements over each scan.

Conventional scanning systems using one or more scanners deliver to the customer one or more cross-directional profiles that are updated periodically at the end of each scan. In multiple scanner systems these scanner profiles are taken at different MD positions. No attempt is made to correlate when a piece of sheet at an upstream scanner is actually (re)measured a little bit later with a down-stream scanner.

In fabricating anode or cathode electrodes, a metal foil from metal rolls is continuously coated with a mixture of active material. To achieve and maintain the quality of continuous, roll-to-roll production of electrodes, there are constant, online measurements of quality factors that are strongly linked to battery performance. Slitting machines cut the finished coated metal foils into sheets of electrodes that are assembled into the cells and batteries.

With current manufacturing techniques, once a battery is assembled, there is no readily available means of identifying and accessing specific data associated with the electrodes that are incorporated into a particular battery. The art is demanding improved production traceability so that purchasers can trace on-line measurements made during production of the electrodes all the way to the assembled electrochemical cells and batteries.

### SUMMARY OF THE INVENTION

The present invention is based, in part, on the generation of a machine direction (MD) position profile measurement of the moving sheet or product that records the MD position of each of the cross direction (CD) measurements. The technique will enable recreation of the real zig-zag measurement path which is not possible with current flat sheet scanning systems.

The invention can apply to a single scanning frame for measuring sheet material properties in the cross direction or to multiple scanning frames spaced along the production process. In the case of multiple scanners, a computer network-based time synchronization protocol, such as the IEEE 1588v2, can be employed to ensure that all scanners are precision time synchronized.

In one aspect, the invention is directed to a sheet monitoring system that includes:
a sheet of material that moves in a machine direction (MD); means for measuring the MD speed of the sheet of material;
means for associating the measured MD speed with time to generate time-associated MD speeds;
means for recording the time-associated MD speeds;
a first scanning sensor for measuring a first characteristic of the sheet material wherein the first scanning sensor is located at a first position along the MD and the first scanner sensor traverses back and forth along a cross direction (CD) which is perpendicular to the MD; and
and means for associating first characteristic measurements with time to generate time-associated first characteristic measurements.

In another aspect, the invention is directed a technique for a producing MD position profile of a moving sheet of material which travels in a MD, that includes a scanning sensor that measures a physical property. The technique includes:
(a) measuring the MD speed of the moving sheet of material and generating time-stamped measured MD speed signals;
(b) recording the time-stamped measured MD speed signals;
(c) receiving time-stamped physical property measurements from the scanning sensor;
(d) correlating the recorded time-stamped measured MD speed signals with the time-stamped physical property measurements; and
(e) generating a MD position profile which shows the physical property measurements in the CD relative to a length of the moving sheet of material that has been produced within a specific time.

In yet another aspect, the invention is directed a technique for a producing MD position profile of a moving sheet of material which travels in a MD, that includes two or more scanning sensors that measures physical properties. The technique includes:
(a) measuring the MD speed of the moving sheet of material and generating time-stamped measured MD speed signals;
(b) recording the time-stamped measured MD speed signals;
(c) receiving time-stamped first physical property measurements from the first scanning sensor;
(d) receiving time-stamped second physical property measurements from the second scanning sensor;
(e) correlating the recorded time-stamped measured MD speed signals with the first physical property measurements and the second physical property measurements; and
(f) generating a MD position profile which shows the first and second physical property measurements in the CD relative to a length of the moving sheet of material that has been produced within a specific time.

With the present invention, the inclusion of MD positioning information, which is obtained by recording the time when each measurement was taken and the machine line speed (at one or more positions in the process) yields not just a profile of measurements but also a "profile of MD sheet positions". With respect to the characteristic zig-zag measurement pattern produced by a scanning sensor, the MD position profile of the present invention will provide the CD values and positions vs. the MD position. For instance, in the case where the scanning sensor is measuring basis weight (measured in grams per square meter), with the MD position profile for each specific MD position of the sheet (as measured in millimeters from a user defined reference) there will be corresponding data for both the CD position (as measured by distance in mm from one edge of the moving sheet) and the basis weight as measured at that CD position.

The improvement is that every measurement gets an extra coordinate. This gives full traceability as the manufacturer can trace and know that in the end the what parts of the sheet (e.g., electrode) went into a specific battery. Thus, defects in the batteries can be traced back using the MD position profile to the exact physical location on the sheet product.

With the present invention, two or more scanner systems can be setup to make synchronized crisscross measurements that can increase the true measurement coverage. For example, two scanners can be setup to create X-shaped measurement profiles instead of the current zig-zag pattern profiles and hence calculate a true CD profile for a fictitious perpendicular line between the two scanners. In addition, two or more scanner systems can be setup to make synchronized crisscross (X-shaped) measurements that will enable computing more accurate measurement averages. Similarly, downstream follower scanners can be setup to retrace the MD position profile of a leader scanner to make same spot measurements. Same spot measurements can be done in batch production as well, where the sheet product that is under measurement is transferred between two scanning systems in a discontinuous manner.

Finally, the MD position profile can be employed to adjust the MD position profile on each downstream scanner in the case of a material break in the production process.

While the invention will be illustrated as being implemented in lithium-ion battery production, it is understood that the invention is applicable in other continuous sheet making processes such as, for example, in the manufacture of paper, rubber sheets, plastic film, metal foil, and the like.

### BRIEF DESCRIPTION OF THE DRAWINGS

FIG. 1 depicts a roll-to-roll sheet production system for continuous coating of a metal substrate with anodic or cathodic materials;
FIG. 2 shows a configuration for synchronizing the scanners;
FIG. 3 shows a machine direction measurement profile;
FIG. 4 shows another configuration for synchronizing the scanners;
FIG. 5 is a plan view illustrating electrode fabrication with dual scanning measurements on a continuous moving sheet and coordinating spot measurements; and
FIG. 6 is a plan view illustrating electrode fabrication with dual scanning measurements on a continuous moving sheet and coordinate spots measurements to form X-shaped coverage of the sheet.

### DETAILED DESCRIPTION OF THE PREFERRED EMBODIMENTS

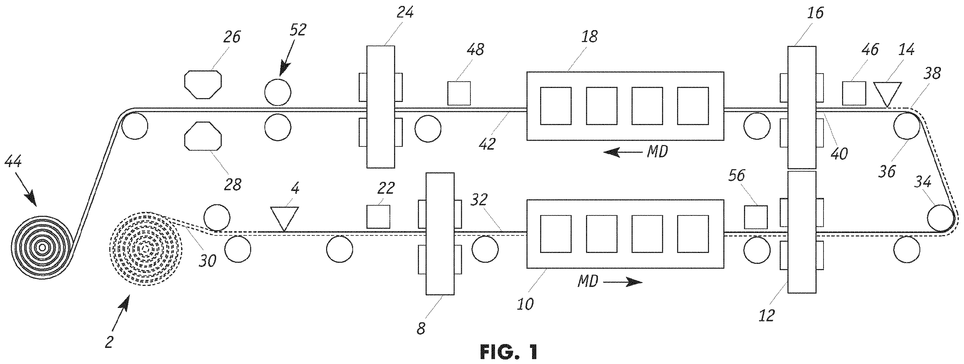

FIG. 1 illustrates a process for coating a metal web or sheet that is used in fabricating electrodes for lithium-ion electrochemical cells and batteries. For making anodes, the electrode coating includes anodic active materials such as graphite and, for making cathodes, the electrode coating includes cathodic active materials such as a lithium metal oxide. Electrodes include a current collector metal foil that is coated on one or both sides of the foil with electrode slurry which can also include carbon black, binder and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material. The foil is typically 9 to 50 µm thick and the electrode coating ranges from 75 to 400 µm in thickness on one or both sides of the foil so that a double-side coated electrode can have a caliper of up to 850 µm with most being typically about 250 µm thick.

As shown in FIG. 1, roll 2 is unwound by an unwinder and supplies a continuous sheet of metal web or sheet 30 that is coated on the top (or first) surface with a layer of electrode slurry by coater 4 which can comprise a tape casting coating device. The basis weight, thickness, and other characteristics of the sheet of metal web 30 from roll 2 are usually known. Tachometer 22 measures the line speed and scanning gauge 8 measures the basis weight, thickness, or other properties of the electrode slurry. The input from the tachometer can be used to compute the MD position of the sheet under measurement. As the scanning gauge 8 scans cross the sheet, the MD position of each CD bin will be recorded to create the MD position profile for the primary sensor. CD/MD offset corrections can be applied for additional sensors in the scanning head. An end-of-roll signal or another dedicated signal can be used to set the reference ('zero') position for the MD position measurement.

Coater 4 includes actuators that control the doctor blade to regulate the amount of slurry that is extruded onto sheet 30. Dryer 10 removes excess solvents and cures the slurry that is on the moving coated sheet 32 to form an electrode layer on the sheet. Tachometer 56 measures the line speed and gauge 12 measures one or more properties of the moving coated sheet exiting dryer 10. Thereafter rolling supports 34, 36 reverse the orientation of the moving sheet so that the second surface is now the uncoated top side whereupon coater 14 applies a layer of electrode slurry on the top or second surface of the moving sheet 38. Tachometer 46 measures the line speed and properties of the double-side coated sheet 40 are measured with gauge 16 before entering dryer 18.

Tachometer 48 measures the line speed and scanner device 24 measures properties of the electrode layers on the first and second surfaces. After calender 52 a rewinder takes up the double-side coated sheet 42 into roll 44. Surface defects on the coatings are monitored by camera-based web inspection systems 26, 28. Although the process is illustrated as being continuous, it is understood that the various steps and attendant measurements can be performed in separately in discrete, discontinuous batch operations. For example, the roll 44 is subsequently subject to a slitting operation to form individual electrodes suitable for assembling into cells and batteries.

Sensors 8, 12, 16 and 24 are depicted as operating in the transmissive mode. For instance, each comprise a radiation source that directs a beam of radiation into a moving sheet and a radiation receiver that detects radiation that is transmitted through the material. Sensors operating in the transmission mode are described, for instance, in U.S. Pat. No. 9,182,360, 8,527,212, 7,298,492 and US 2021/0382173 and US 2021/0262776, which are incorporated herein by reference. Alternatively, the sensors can operate in the reflective mode. For instance, each sensor has an upper head housing both a radiation source and detector. Sensors operating in the reflective mode are described, for instance, in U.S. Pat. No. 9,182,360, U.S. Pat. No. 8,527,212, U.S. Pat. No. 7,298,492 and US2020/0096308, which are incorporated herein by reference. The sensors can also comprise a combination of reflective and transmissive sensors.

Maps displaying the scanner measurements are typically divided into points or bins across the width; for example, each bin can represent a distance of about 5 mm.

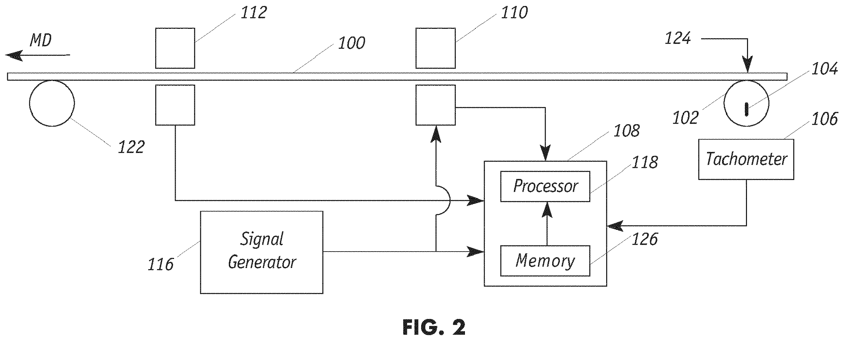

FIG. 2 illustrates a system for MD position profile measurement of a continuous electrode sheet 100 which moves in the MD and is supported by rollers 102 and 122. Roller 102, which supports sheet 100 at position 124, includes a magnet 104 that is monitored by a line tachometer 106. The MD speed can be measured at any position of the moving sheet 100; it is preferable to measure the MD speed near scanning sensor 110 since the sheet can stretch. Alternatively, an optical tachometer can be employed.

Located downstream are scanning sensors 110 and 112; the distances of the two scanners from position 124 are known. Line tachometer pulses are counted at a designated rate, such as 2 KHz, and accurately time stamped. The system includes a controller 108 which has a processor 118 and memory 126 and a signal generator 116. In operation, line tachometer measures the rotation speed of roller 102 and sends pulse signals to controller 108 which converts the rotation speed to MD speed by relating to the radius of roller 102. Scanners 110 and 112 each measures characteristics of sheet and transmits corresponding signals to the controllers. The signal generator 116 sends synchronizing signals to scanner 110 which establishes the origin for the MD position axis. In this system, the synchronization signals need only be provided to one of the scanners on the line. Integration of the velocity over time yields the change in position along the MD.

In particular, the scanners 110 and 112 perform binning of MD positions such that instances when the scanning gauge enters and exits in each of the user-defined, cross direction measurements regions (bins) are accurately timestamped. The tachometer counts values that fall within these timestamps which are accumulated and averaged to generate a MD position of each such cross directional bin. Thereafter, the MD position of each bin of the sensor measurement profile is aggregated as an array and displayed as an MD position profile for each cross directional profile. Each sensor signal measuring a sheet property is also aggregated as an array and displayed as a cross direction profile.

Time-synchronized is particularly suited for coordinate MD position measurements in a production line. Time synchronizing multiple scanners in a production line allows the MD reference position synchronization signal to be wired to only one scanner. Time stamps of the synchronization signals are accurately measured by the scanner to which it is wired. These time stamps are transferred to other scanners using a conventional TCP/IP network. Since all scanners are time synchronized, the scanner receiving synchronization signal timestamp can accurately associate it with its local tachometer timestamps to establish the MD reference position.

Each scanner can be configured to reset its position relative to the MD reference position when triggered by synchronization signals. A quantity designated "Sync Offset", for instance, compensates for the true distance between each scanner down the production line so that a point on the sheet measured by one scanner appears at the same MD position when measured by a second scanner further down the production line. Even if the scanners are not coordinated, the scans from a similar spot on the sheet can be programmatically put together.

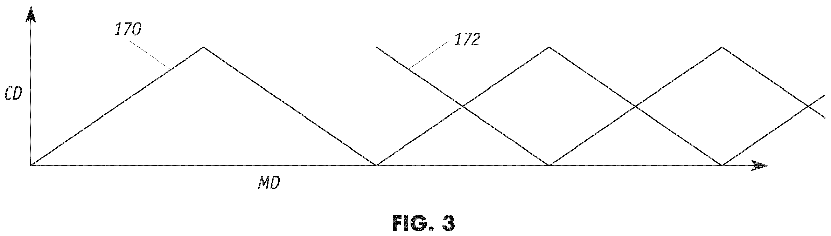

FIG. 3 is a representative of an MD position measurement which shows sensor measurements in CD vs. MD. The profiles are for scanners that move back-and-forth along the CD at a constant speed and the scanners measure physical properties of a moving sheet which travels at a constant speed. Curve 170 are measurements by sensor 110 and curve 172 are measurements by sensor 112 (shown in FIG. 2). At each point along the CD curves 170 and 172, the measured values will also be available. (The values are not shown in FIG. 3.) The values can be shown on the curves by color codes or icons where different hues or icons represent specific values (such as, basis weight ranges). It should be noted that in actual operations, each scanner decelerates as it approaches an edge of a sheet, stops at the edge and then accelerates as it moves away from the edge towards the center of the sheet. Thus, the zig-zag patterns of the CD profiles in this figure and the figures herein will be curved rather than exhibit the sharp corners as illustrated.

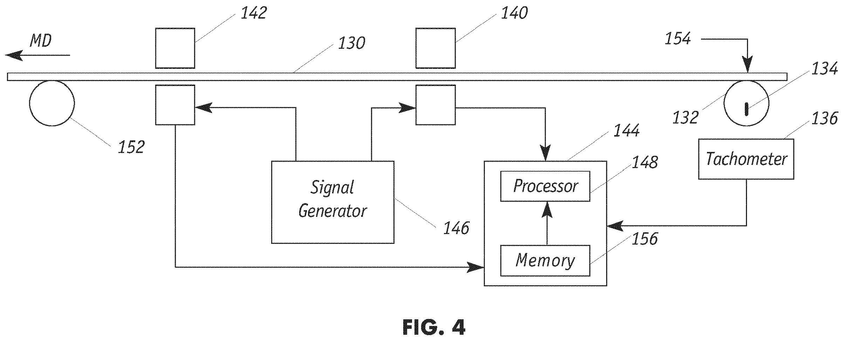

FIG. 4 is another system for MD position profile measurement of a continuous electrode sheet 130 which moves in the MD and is supported by rollers 132 and 152. Roller 132, which supports sheet 130 at position 154, includes a magnet 134 that is monitored by a line tachometer 136. Located downstream are scanning sensors 140 and 142; the distances of the two scanners from position 154 are known. Signal generator, which serves as an external clock master, sends synchronization signals to sensors 140 and 142.

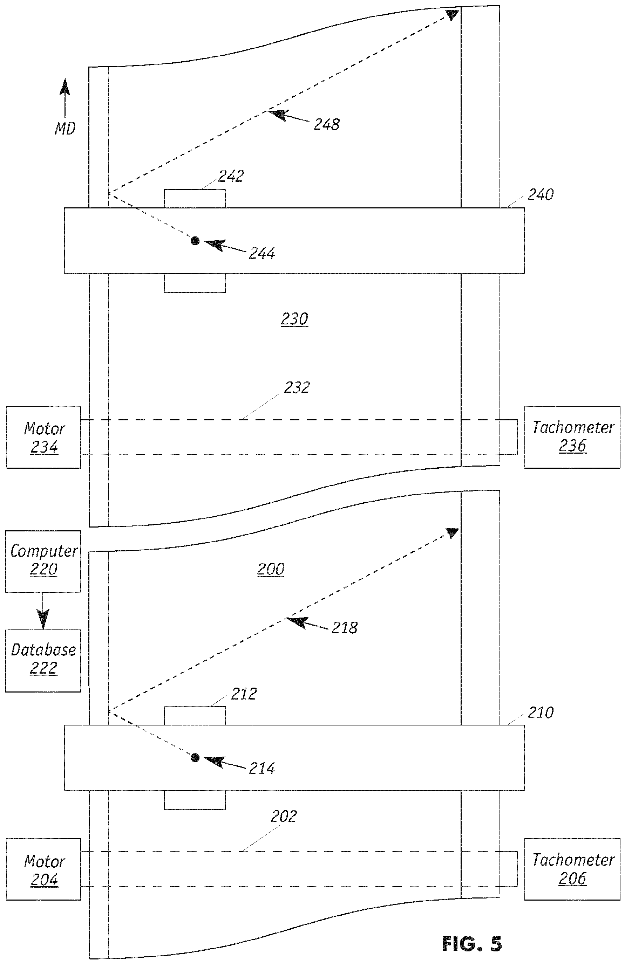

FIG. 5 illustrates the use of the MD position profiles in tracking different measurements of electrode layer(s) on a moving sheet in order to improve traceability of battery electrodes. Electrode layer 200 is coated on a moving substrate (foil) that is supported and transported in the MD by roller 202 which is operated by motor 204. Tachometer 206 monitors the speed of roller 202. Frame 210 supports scanning device 212 that includes a gauge which measures the basis weight and/or thickness of the coated sheet. The scanning device periodically traverses coated sheet 200 generally at a constant speed. The gauge is shown measuring spot or area 214 of the coated sheet 200. The gauge does not measure the selected sheet property at locations which are aligned exactly perpendicular to the longitudinal edges of the sheet. Instead, because of the sheet velocity, the scanning device travel diagonally across the coated sheet surface, with the result that consecutive scanning paths have a zig-zag pattern with respect to the direction perpendicular to the longitudinal edges of coated sheet 200. An example of such a zig-zag pattern is scanning path 218 which would be traced by the gauge as the scanning device 212 traverses the surface of sheet during back-and-forth consecutive scans. The angles of the scanning path relative to the true CD depend upon the cross-directional velocity of the scanning device and upon the machine-directional velocity of the coated sheet 200 which is known. The zig-zag pattern of interrogations spots covers a relatively small portion of the coated sheet 200 surface.

Computer 220 coordinates the measurements by scanning device 212 so that the locations of interrogation spots in pattern 218 are recorded in database 222 along with the corresponding MD positions. In this fashion, when the coated sheet 200 is cut into individual electrodes, the measurements made on each electrode are known; moreover, electrochemical cells and batteries incorporating these electrodes can be identified by serial numbers that will allow the measurements to be retrieved.

Another feature of the present invention is that the MD position profiles can be employed to synchronize subsequent measurements to prior measurements. For example, coated sheet 200 of FIG. 5 after being measured by sensor 212 can be removed to another line for further processing such as for drying or calendering. Thereafter, the so-treated coated sheet 230 is formed and is subject to a second measurement. Sheet movement is supported on rollers 232 and frame 240 secured a second scanner device 242. The release time and CD speed of the downstream scanner device 242 are adjusted by computer 220 so as to synchronize second measurements by scanner device 242 with the first measurements executed downstream by scanner device 212. The scanning device 242 can be reset to commence measurements at interrogation spot 244 so that the interrogation spots in pattern 248 coincide with those in zig-zag pattern 218.

As the second measurements by scanning device 242 are made, the locations of the interrogation spots in pattern 248 are recorded in database 222 along with the corresponding MD position profile. The database thus has a library of first and second measurements that were made on essentially the same interrogation spots. When the coated sheet is cut into individual electrodes and assembled into electrochemical cells and batteries, these electrodes can be identified by serial numbers that will allow both first and second sets of measurements to be traced.

Referring to FIG. 5, the MD speeds for sheet 200 and 230 can be different so that the position of downstream scanner 242 is adjusted so that its CD motion coincides with that of scanner 212. Most of the time, the MD speeds for both sheets are the same so that the scanners will have the same speed profile. It should be noted that scanners are often accelerating or decelerating at the sheet edges, so the scanner CD motion is more complex than just a constant speed.

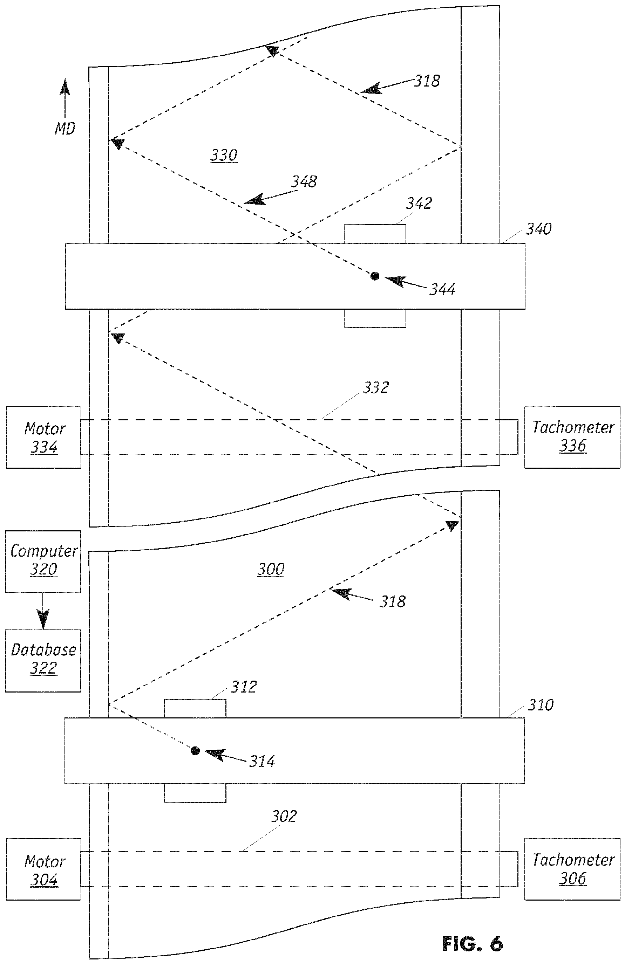

FIG. 6 illustrates using two scanners 312 and 342 to develop an X-shaped pattern on sheet 330. Zig-zag pattern 318 is generated by scanner 312 and the downstream scanner 342 generated zig-zag pattern 348 using the MD position information from the upstream scanner 312 such that the two zig-zag patterns form X-shaped coverage along the MD of the sheet. An advantage of this arrangement is that there is better coverage of the sheet and the CD profile averages are more accurate.

The foregoing has described the principles, preferred embodiments and modes of operation of the present invention. However, the invention should not be construed as being limited to the particular embodiments discussed. Thus, the above-described embodiments should be regarded as illustrative rather than restrictive, and it should be appreciated that variations may be made in those embodiments by workers skilled in the art without departing from the scope of the present invention.

## Claims

1. A sheet monitoring system that comprises:
a sheet of material that moves in a machine direction (MD);
means for measuring the MD speed of the sheet of material;
means for associating the measured MD speed with time to generate time-associated MD speeds;
means for recording the time-associated MD speeds;
a first scanning sensor for measuring a first characteristic of the sheet material wherein the first scanning sensor is located at a first position along the MD and the first scanner sensor traverses back and forth along a cross direction (CD) which is perpendicular to the MD; and
means for associating first characteristic measurements with time to generate time-associated first characteristic measurements.

2. The system of claim 1 wherein the means for associating the MD speed with time comprises a first processor that generates a time stamp as the time information on the measured MD speed.

3. The system of claim 1 wherein the means for associating first characteristic measurements with time comprises the first processor that generates time stamps as the time information on the first characteristic measurements.

4. The system of claim 1 wherein the first scanning sensor generates CD profiles of first characteristic measurements by averaging the measurements in finite sized bins of CD segments.

5. The system of claim 1 comprising:
a second scanning sensor for measuring a second characteristic of the sheet material wherein the second scanning sensor is located at a second position along the MD, which is downstream from the first scanning sensor at a known distance, and the second scanner sensor traverses back and forth along the CD; and
means for associating second characteristic measurements with time to generate time-associated second characteristic measurements.

6. The system of claim 5 comprising a processor that is configured to generate a time stamp to the first scanning sensor and to the second scanning sensor.

7. The system of claim 1 wherein the sheet of material is supported by a first roller and the means for measuring the speed of the sheet of material comprises a tachometer that measures the rotation speed of the first roller.

8. The system of claim 1 wherein the sheet of material comprises a coated metal substrate.

9. In a sheet system for measuring properties of a moving sheet of material which travels in a machine direction (MD) that includes a scanning sensor that measures a physical property of the moving sheet of material, a method of producing MD position profile that comprises:
(a) measuring the MD speed of the moving sheet of material and generating time-stamped measured MD speed signals;
(b) recording the time-stamped measured MD speed signals;
(c) receiving time-stamped physical property measurements from the scanning sensor; and
(d) correlating the recorded time-stamped measured MD speed signals with the time-stamped physical property measurements; and
(e) generating a MD position profile which shows the physical property measurements in the CD position as a function of a length of moving sheet of material that has been produced within a specific time.

10. The method of claim 9 wherein the scanner sensor generates CD profiles of physical property measurements by averaging the measurements in finite sized bins of CD segments.

11. In a sheet system for measuring properties of a moving sheet of material which travels in a machine direction (MD) that includes a first scanning sensor that measures a first physical property of the moving sheet of material and a second scanning sensor, located downstream of the first scanning sensor at a known distance, that measures a second physical property of the moving sheet, a method of producing MD position profile measurements that comprises:
(a) measuring the MD speed of the moving sheet of material and generating time-stamped measured MD speed signals;
(b) recording the time-stamped measured MD speed signals;
(c) receiving time-stamped first physical property measurements from the first scanning sensor;
(d) receiving time-stamped second physical property measurements from the second scanning sensor;
(e) correlating the recorded time-stamped measured MD speed signals with the time-stamped first physical property measurements and the time-stamped second physical property measurements; and
(f) generating a MD position profile which shows the first and second physical property measurements in the CD relative to a length of the moving sheet of material that has been produced within a specific time.

12. The method of claim 11 wherein the method comprises synchronizing the second scanning sensor with the first scanning sensor.

13. The method of claim 12 wherein the first scanning sensor measures the first physical property along a first zig-zag pattern with respect to the sheet of material and the second scanning sensor measures the second physical property along a second zig-zag pattern with respect to the sheet of material and wherein the first zig-zag pattern and the second zig-zag form a crossing pattern with respect to the sheet of material.

14. The method of claim 12 wherein the first scanning sensor measures the first physical property along a first zig-zag pattern with respect to the sheet of material and the second scanning sensor measures the second physical property along a second zig-zag pattern with respect to the sheet of material and wherein the first zig-zag pattern matches the second zig-zag pattern.

15. The method of claim 12 which comprises transmitting a synchronization signal so that the second scanning sensor is synchronized with the first scanning sensor at a selected time so that MD position data for the MD position profile start at a predetermined length.
